# EUROPÄISCHE PATENTSCHRIFT

(11) **EP 0 614 548 B1**
(45) Veröffentlichungstag und Bekanntmachung des Hinweises auf die Patenterteilung: **17.01.1996**
(21) Anmeldenummer: 92924616.3
(22) Anmeldetag: 27.11.1992
(51) Int. Cl.: G05B 19/05

(54) **VERFAHREN ZUR AUTOMATISCHEN STEUERUNG VON HERSTELLUNGSPROZESSEN**
METHOD FOR THE AUTOMATIC CONTROL OF MANUFACTURING PROCESSES
PROCEDE DE COMMANDE AUTOMATIQUE DE PROCESSUS DE FABRICATION

(30) Priorität: 28.11.1991 DE 4139179
(43) Veröffentlichungstag der Anmeldung: 14.09.1994
(73) Patentinhaber: WACKER-CHEMIE GMBH, D-81737 München (DE)
(72) Erfinder: KRUMMEN, Helmut, D-5177 Titz/Gevelsdorf (DE); SCHMITZ, Anton, D-4047 Dormagen 11 (DE); SELIG, Manfred, D-5000 Köln 71 (DE)
(86) Internationale Anmeldenummer: EP9202753
(87) Internationale Veröffentlichungsnummer: WO9311475

(56) Entgegenhaltungen:
- FR-A- 2 275 819
- FR-A- 2 641 878
- TECHNISCHE RUNDSCHAU Bd. 15, Nr. 11, 15. März 1991, BERN, CH; Seiten 68-72, MICHAEL LASKOWSKI 'Das Programm und sein Zuschauer'see page 72,middle column-page 72 see figures 5,11

## Beschreibung

Die Erfindung betrifft ein Verfahren zur automatischen Steuerung von Chargenprozessen mittels einer Prozeßsteuerung bei der Automatikprogramme auf Einzelablaufsteuerungen zugreifen.

Chargenprozesse sind Verfahren bei denen nach einer vorgegebenen Vorschrift das gewünschte Produkt in einer zeitsequentiellen Folge von verfahrenstechnischen Teilaufgaben hergestellt wird. Der Ablauf solcher Prozesse kann mittels einer automatischen Prozeßsteuerung gesteuert werden. Derartige automatische Prozeßsteuerungen bestehen aus zwei Grundblöcken, der Hardware und der Software.

Die Hardware-Komponenten umfassen eine oder mehrere Zentralrechnereinheiten mit internen bzw. externen Speichereinheiten sowie Ein- und Ausgabe-Einheiten, beispielsweise analoge bzw. binäre Ein- und Ausgabekarten zur Kommunikation mit den zu steuernden Anlagen; Tastatur, Maus oder Lichtgriffel zur Bedienung der Prozeßsteuerung und Bildschirm oder Drucker zur Beobachtung der Prozeßsteuerung.

Die Software beinhaltet die Rezepturprogramme und/oder allgemeine Verriegelungs- und/oder Ablaufprogramne und die prozeßnahen software-Komponenten. Die Rezepturprogramme sind die Verfahrensvorschriften mit den Grundoperationen und deren Ablauforganisation zur Herstellung eines Produkts im zu steuernden Chargenprozeß. Üblicherweise sind solche Rezepturprogramme in Teilrezepturen strukturiert, die die parallele oder sequentielle Durchführung von Teilaufgaben in verschiedenen Prozeßeinheiten steuern.

Die Elementarbausteine der Rezepturprogramme oder Teilrezepturen sind die Phasen. Die Phasen-Programme sind strukturiert in den Steuerteil (Ablaufteil), den Parameterteil und den Kommunikationsteil. Der Steuerteil enthält die Programmelemente für die Schrittfolge der Grundoperationen des Prozesses mit den Angabe der Anfangsbedingungen, der Verfahrensschritte und ihrer Verknüpfung, der Endbedingungen und die Schrittfolge bei Störungen. Der Parameterteil zur Steuerung eines chemischen Prozesses kann etwa die Einsatzstoffe und deren Menge, die Normalzeit für einen Prozeßschritt, die Prozeßvariablen (Soll- und Grenzwerte für Temperatur, Druck etc.) und die zulässigen Bedienungseingriffe umfassen. Der Kommunikationsteil beinhaltet die Programmbestandteile für den Datenaustausch zwischen den Phasen und dem Datenaustausch mit dem Bediener zur Meldung von Störungen oder des aktuellen Zustandes des Prozesses. Weiter beinhaltet der Kommunikationsteil die Programmelemente zur Ansteuerung der prozeßnahen Software der Einzelsteuerebene, das heißt der Einzelsteuerbausteine, welche beispielsweise die Ansteuerung der Regler, Ventile oder Motoren der Prozeßanlage bewerkstelligen.

Bei der prozeßnahen Software, den Bausteinen zur Einzelansteuerung, handelt es sich um Programme, die von den Ablaufprogrammen (Rezeptur) angesteuert werden und deren Befehle zur Steuerung von einem oder mehreren Operanden (Aktoren), beispielsweise Regler, Ventile, Motoren, umsetzen.

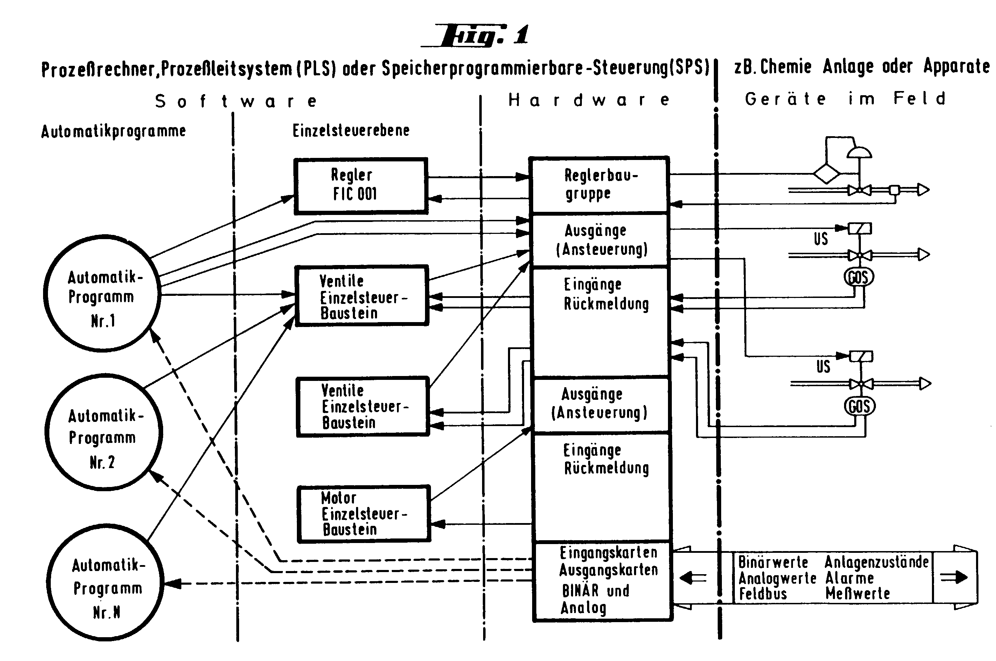

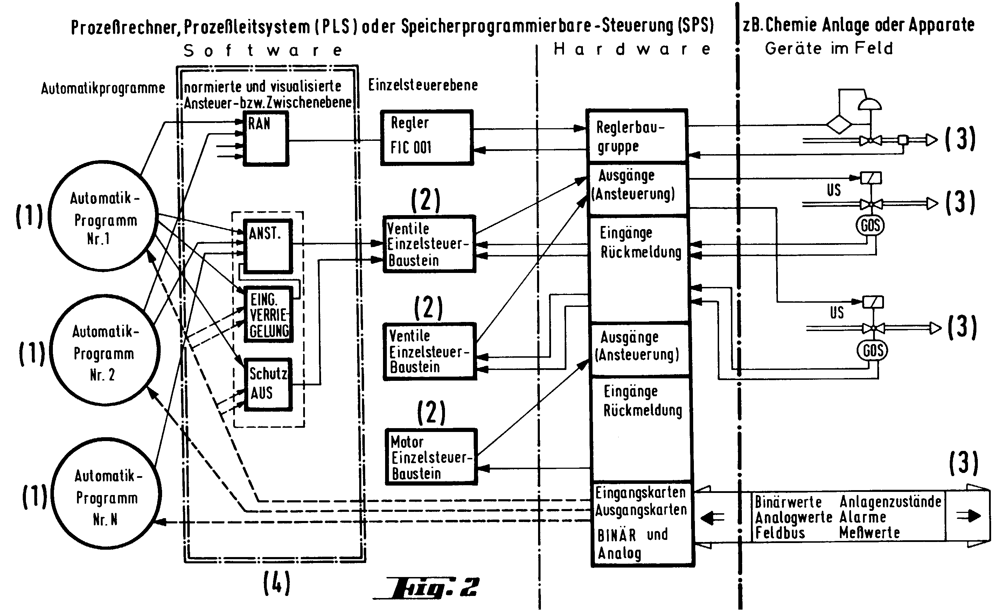

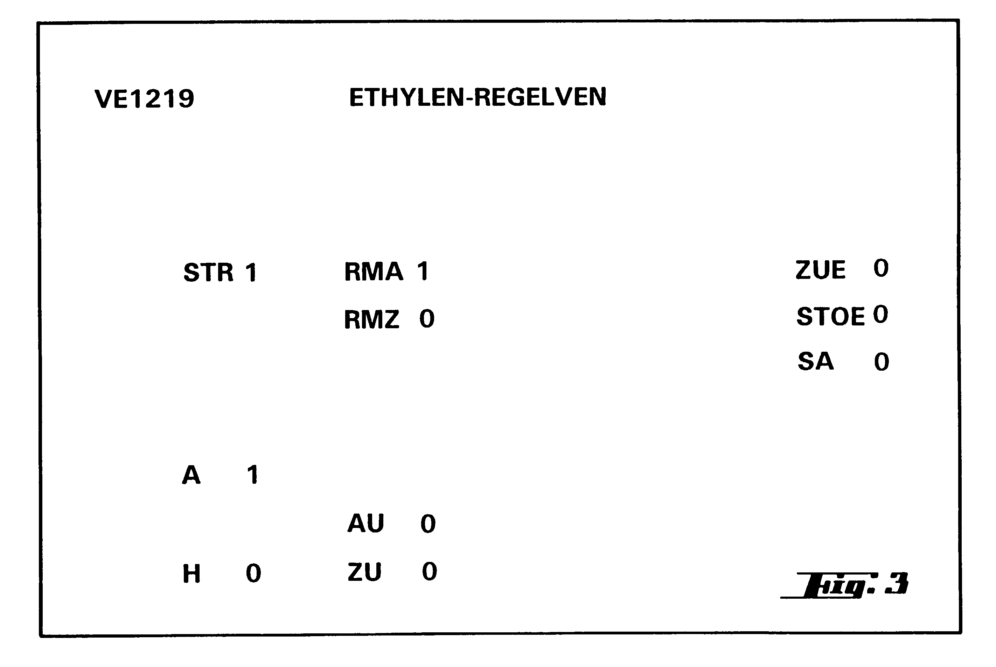

In Figur 1 ist das Prinzip der Prozeßsteuerung eines Chargenprozesses wie es dem Stand der Technik entspricht dargestellt:

Das Rezepturprogramm zur Steuerung des Gesamtprozesses beinhaltet mehrere Teilrezepturen, hier Automatikprogramme genannt. Während des Programmverlaufs greifen die Automatikprogramme direkt auf die Hardware der Anlage zu oder steuern einen oder mehrere Einzelsteuerbausteine zur Ansteuerung oder Verriegelung von Reglern, Ventilen oder Motoren an. Die Einzelsteuerbausteine steuern dabei jeweils einen Aktor im Feld an. Während des Ablaufs der Prozeßsteuerung erfolgen Rückmeldungen über den Zustand der Geräte im Feld an die Einzelsteuerebene bzw. an die Automatikprogramme sowie an das Prozeßbedien/beobachtungssystem.

Im Programmverlauf greifen dabei unter Umständen unterschiedliche Automatikprogramme gleichzeitig auf einen Einzelsteuerbaustein oder auf einen Aktor im Feld zu. Die Häufigkeit solcher gleichzeitigen Ansteuerungen bzw. ihrer Verriegelungen nimmt mit steigender Konplexizität der Softwareprogramme dramatisch zu. Werden dem Bedienungspersonal bei solch komplexen Programmen nun Störungen im Prozeßablauf gemeldet, beispielsweise "Öffnen eines Ventils ist verriegelt", läßt sich nicht zweifelsfrei analysieren wo der Fehler herrührt. Die Störung kann von einem defekten Sensor herrühren, der Fehler kann in der Hardware der Prozeßsteuerung liegen (Karte defekt, Sicherung gefallen), es kann sich um einen Programmfehler in der Ablaufkette der Rezepturprogramme handeln, ein Bedienungsfehler kann vorliegen (Ventil steht in Handbedienung) oder die Verriegelung kann durch die Prozeßbedingungen ausgelöst worden sein (Druck im Behälter zu hoch, daher Öffnen des Ventils verriegelt).

Wenn die Softwareanbindung der Rezepturprogramme an die Hardware nach dem Stand der Technik über eine Einzelsteuerebene wie in Figur 1 durchgeführt wird, hat das Bedienungspersonal in der Meßwarte zwar immerhin die Möglichkeit zu unterscheiden ob der Fehler in den Feldgeräten liegt. Weitergehende Aussagen, ob der Fehler nun in den Automatikprogrammen oder in der Hardware liegt, sind jedoch nicht möglich. Welches aktuell zugreifende Automatikprogramm gerade welche Funktion bewirkt ist nicht ohne weiteres feststellbar. Die Ursachen beispielsweise einer Maschinenschutzverriegelung, einer verfahrenstechnischen Verriegelung oder einer Ansteuersperre sind nicht zu erkennen. Mit den bisher bekannten Verfahren zur Prozeßsteuerung ist es zwar möglich den Status eines Aktors festzustellen; wie dieser Status entstanden ist, durch welche Zugriffe welcher Grundfunktionen der Phasen der Prozeßsteuerung, ist allerdings nicht nachvollziehbar.

In "Automatisierungstechnische Praxis - ATP. Vol. 31, No. 6, June 1989, München, Seite 282 - 286" wird ein Standardsoftwarepaket "Grundfunktionen" beschrieben, welches an übergelagerte Automatikprogramme angebunden ist. Zur Prozeßbeobachtung kann dargestellt werden, ob eine Grundfunktion auf einen Aktor aktuell zugreift (LUPE), welche Verriegelungsbedingungen für welche Grundfunktionen gelten (VERA) und welche Grundfunktionen für eine Aktor bedienbar sind (GFLI). Die aktorweise Speicherung in einer Zwischenebene von Phasen der Automatikprogramme für die Ansteuerung (z. B. aus Grundfunktionen) und für die Verriegelung und für die Einschaltsperren eines oder mehrerer Aktoren und deren logische Verknüpfung wird nicht beschrieben und durch Nichts nahegelegt.

"Automatisierungstechnische Praxis - ATP. Vol. 30, No. 4, 1988, München, Seite 186 - 190" beschreibt ein Standardsoftwarepaket "Grundfunktionen", welches in ein Prozeßleitsystem integriert ist. Zur Überwachung des zu steuernden Prozesses können die statischen Betriebszustände des Aktors sowie die aktuell wirksame Ansteuerung (Grundfunktion) angezeigt werden. Die Speicherung der Phasen der Automatikprogramme, welche die Ansteuerung, Verriegelung und Einschaltsperre sowie deren prozeßlogische Verknüpfung betreffen, in einer separaten Programmebene wird nicht beschrieben. Die Ausgabe an das Bedien-/Beobachtungssystem der aktuell wirksamen Ansteuerungen, Verriegelungen sowie Einschaltsperren und deren prozeßlogische Verknüpfungen werden ebenfalls nicht beschrieben.

Es bestand daher die Aufgabe ein Verfahren zur automatischen Steuerung von Chargenprozessen, mittels einer Prozeßsteuerung bei der Automatikprogramme auf Einzelablaufsteuerungen zugreifen, zu entwickeln, mittels dessen die aktuellen Ansteuerungen auf die Einzelansteuerungen der Aktoren im Feld dergestalt erkennbar werden, daß eindeutige Aussagen über Störungen und deren Ursachen möglich werden, welche unumgänglich für die Störungsbeseitigung und entscheidende Faktoren für die Sicherheit, Verfügbarkeit und Wirtschaftlichkeit einer Anlage sind.

Gegenstand der Erfindung ist ein Verfahren zur automatischen Steuerung von Chargenprozessen mittels einer Prozeßsteuerung bei der Automatikprogramme (1) auf Einzelsteuerbausteine (2) zugreifen, dadurch gekennzeichnet, daß
a) die in den Automatikprogrammen (1), das heißt in den Teilrezepturen oder Phasen des Rezepturprogramms, enthaltenen Steueranweisungen und Parameterdefinitionen für die Ansteuerung, Verriegelung und Einschaltsperre von Aktoren (3) im Feld in einer separaten Programmebene (4) gespeichert werden,
b) in der separaten Programmebene (4) die Steueranweisungen und Parameterdefinitionen für jeden anzusteuernden Aktor (3) aktorweise zusammengefaßt und logisch verknüpft werden, und
c) die aktuell wirksamen Ansteuerungen, Verriegelungen und Einschaltsperren aktorweise an das Prozeßbedien- und -beobachtungssystem ausgegeben werden.

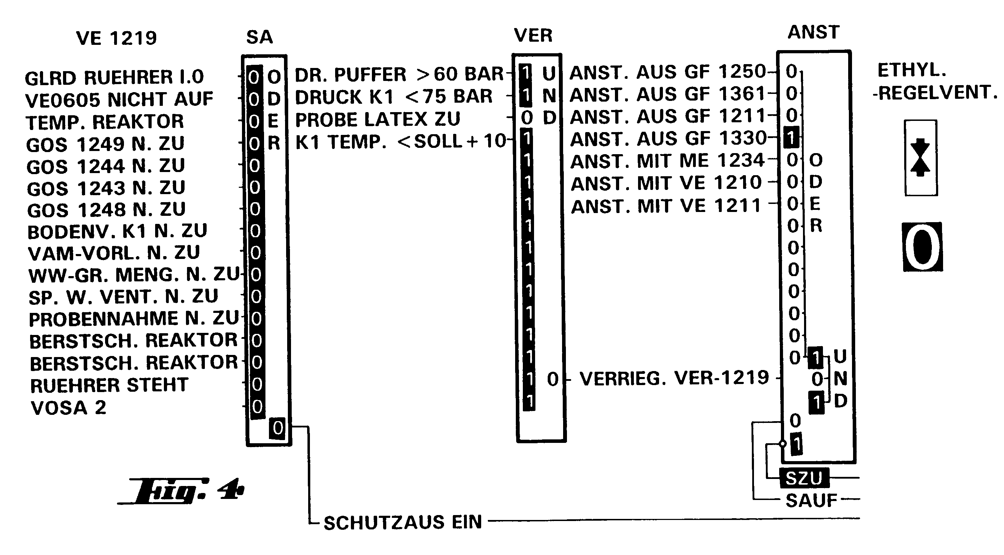

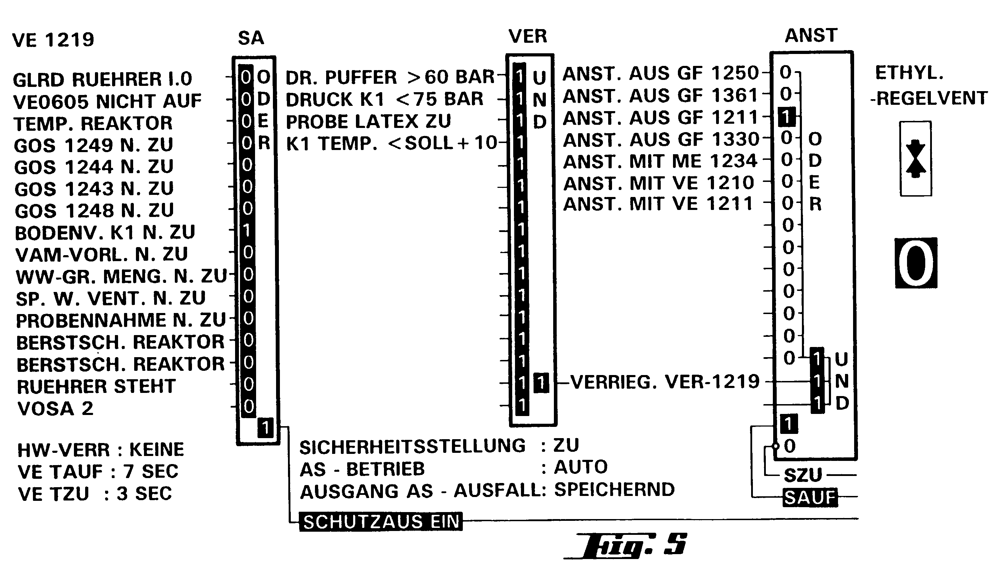

Figur 2 zeigt am Beispiel eines Chargenprozesses aus der chemischen Industrie das erfindungsgemäße Prinzip einer Prozeßsteuerung bei der die Ansteuerung von Reglern und Ventilen, die Verriegelung von Ventilen und die Einschaltsperre von Ventilen in einer separaten Programmebene (Zwischenebene) (4) gespeichert sind. Die Automatikprogramme (1) greifen nicht direkt auf die Hardware der Anlage oder die prozeßnahen Einzelbausteine (2) zur Ansteuerung bzw. Verriegelung von Aktoren (3), beispielsweise Reglern oder Ventilen, zu, sondern greifen über die separate Programmebene (Zwischenebene) (4) auf die Einzelbausteine (2) für die Steuerung bzw. Verriegelung der Regler und Ventile zu. Während des Prozeßablaufs erfolgen Rückmeldungen über den Status der Verriegelungen bzw. den Status der Einschaltsperren an die Zwischenebene (4) der Software der Prozeßsteuerung. Der Status der aktuell wirksamen Ansteuerungen und Verriegelungen wird an das Prozeßbedien/beobachtungssystem ausgegeben.

Mit dem erfindungsgemäßen Verfahren werden die Steueranweisungen und Parametrierungen für einzelne oder mehrere Ansteuerungen und/oder Verriegelungen und/oder Einschaltsperren eines oder mehrerer Aktoren in der genannten Zwischenebene gespeichert. Vorzugsweise werden die Steueranweisungen und Parametrierungen für alle Ansteuerungen und/oder Verriegelungen und/oder Einschaltsperren aller von der Prozeßsteuerung angesteuerten Aktoren in der genannten Zwischenebene gespeichert. Die Bestandteile der Automatikprogramme, die erfindungsgemäß in der Zwischenebene gespeichert werden, enthalten keine Anweisungen zur Ablaufsteuerung. Die aktorenbezogenen Ansteuerungen, Verriegelungen und Einschaltsperren sind jeweils prozeßspezifisch mit "und"- oder "oder"-Verknüpfung verbunden.

Bei der Ansteuerung von Reglern als Aktoren erfolgt vorzugsweise eine "oder"-Verknüpfung. Der Einzelsteuerbaustein eines Reglers wird nur bei eindeutiger Ansteuerung der Zwischenebene mit einem Sollwert aus der Zwischenebene (Rangierebene) angesteuert. Ansonsten erfolgt keine Ansteuerung oder eine Ansteuerung mit einem Sicherheits-Sollwert.

Zur Bedienbeobachtung der Prozeßsteuerung können einzelne, mehrere oder alle der vorhandenen Ansteuerungen und/oder Verriegelungen und/oder Einschaltsperren eines Aktors in den Prozeßbedien/beobachtungssystemen dargestellt werden. Die Ansteuerungen, Verriegelungen und/oder Einschaltsperren werden aktorweise (beispielsweise für ein spezielles Ventil) oder aktor-gruppenweise unter Darstellung der logischen Verknüpfungen zwischen den Zuständen der Aktoren im Bedien/- beobachtungssystem dargestellt. Vorzugsweise werden die Ansteuerungen, Verriegelungen und Sperren eines Aktors im Prozeßbedien/beobachtungssystem zu einem Bild zusammengefaßt. In einer besonders bevorzugten Ausführung können diese Anzeigen noch durch die Anzeige statischer Betriebszustände ergänzt werden. Für ein Ventil wären dies zum Beispiel Angaben über Ventilöffnungs- bzw. -schließzeiten, Betriebszustand der automatischen Prozeßsteuerung (aus/ein), manuelle Sperre (ja/nein).

Zur übersichtlicheren Visualisierung können die Ansteuerungs-, Verriegelungs- und Einschaltsperren-Zustände mit Klartext belegt werden und die möglichen und aktuell wirksamen Zustände durch Text- oder Farbumschlag unterschieden werden.

Das erfindungsgemäße Verfahren soll im folgenden am Beispiel eines Ethylenregelventils (VE 1219) demonstriert werden, welches die Ethylenzufuhr zu einem Reaktor regelt.

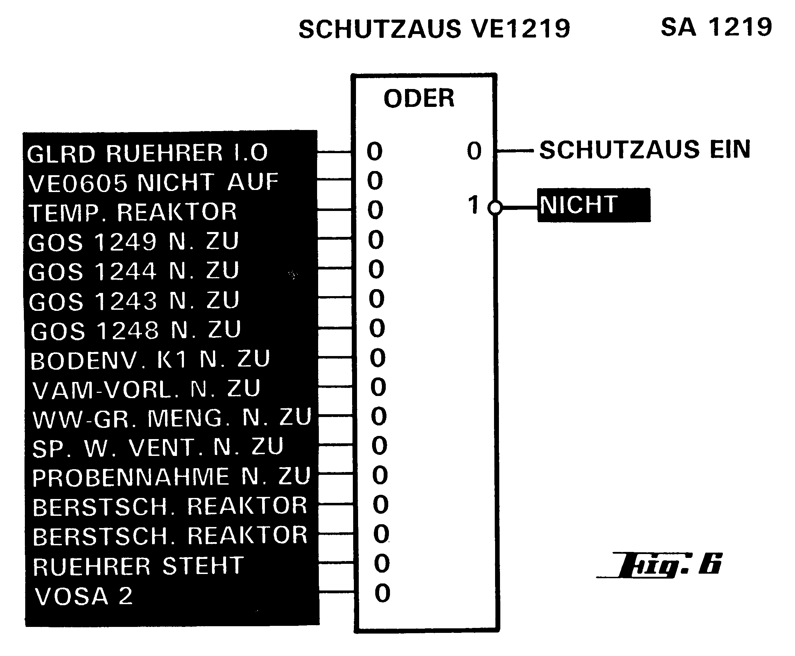

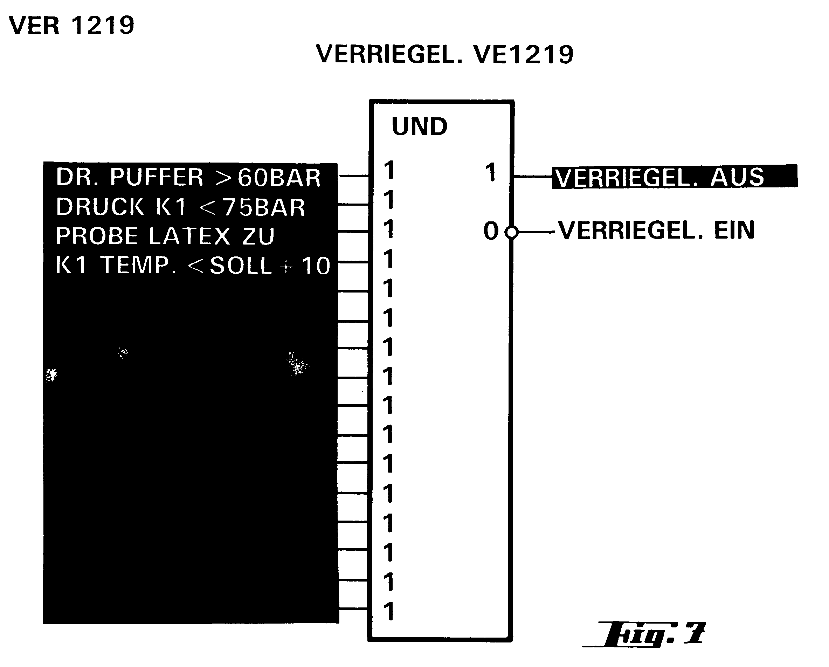

Figur 3 zeigt eine Visualisierung des aktuellen Zustands des Ethylenregelventils wie sie mit Prozeßsteuerungssystemen erhalten wird, die dem Stand der Technik entsprechen und bei denen die Automatikprogramme direkt die Einzelsteuerbausteine ansteuern.

Man erhält folgende Rückmeldungen vom Ausgang der Einzelsteuerebene:
STR 1 = Ansteuerung aus Automatikebene
RMA 1 = Rückmeldung aus Prozeß - Ventil auf
RMZ 0 = Rückmeldung aus Prozeß - Ventil nicht zu

Rückmeldungen vom Eingang der Einzelsteuerebene:
H = 0; A = 1 Ansteuerung aus Automatikprogrammen aktiv
H = 1; A = 0 Ansteuerung aus Handebene aktiv wenn Handebene aktiv, kann gesteuert werden:
AU = 1; ZU = 0 Handbedienung AUF
AU = 0; ZU = 1 Handbedienung ZU

Rückmeldungen aus Einzelsteuer-Überwachung zur Störerkennung:
ZUE 0 = Zeitüberwachung nicht angesprochen
STOE 0 = Keine Störung
SA 0 = Einschaltsperre aus

Man erhält damit nur die Information, daß der Einzelsteuerbaustein des Ethylen-Regelventils durch das Automatikprogramm angesteuert wird und das Ventil geöffnet ist. Durch welche Grundfunktion des Automatikprogramms das Ventil angesteuert wird und durch welche Verknüpfungen zwischen den Grundfunktionen der verschiedenen Ansteuerungen und Verriegelungen das Ventil geöffnet wird, ist nicht zu erkennen.

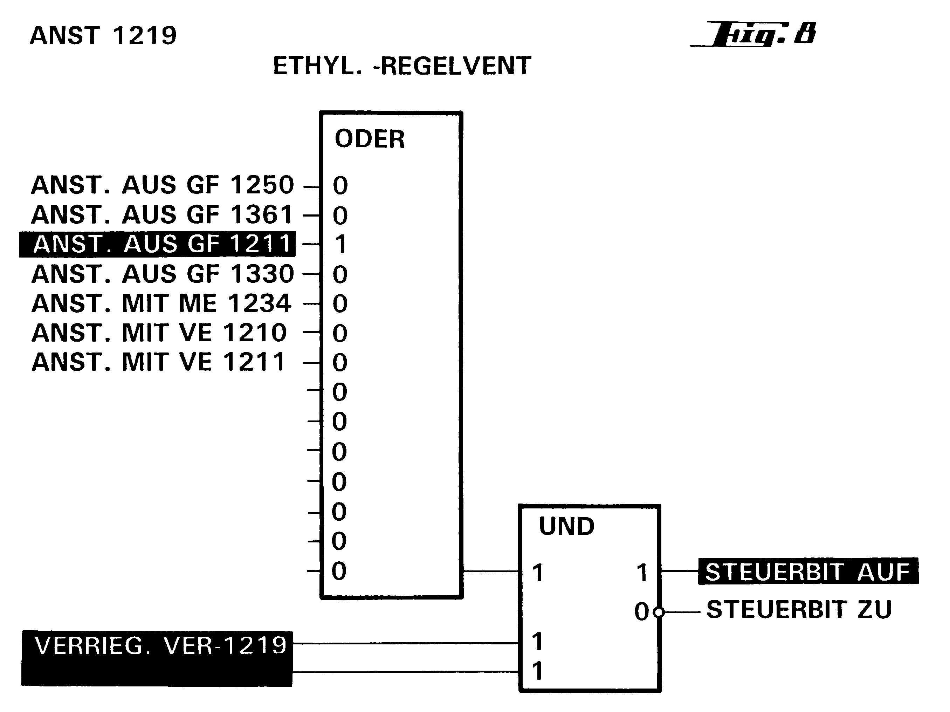

Figur 4 zeigt die erfindungsgemäße Visualisierung der Ansteuerungen, Verriegelungen und Einschaltsperren (Schutz aus) des Ethylenregelventils VE 1219 bei Prozeßsteuerung mit der erfindungsgemäßen Verfahrensweise:

Links sind die Bedingungen aufgeführt für die Inaktivierung der Einschaltsperre SA. Die Abkürzungen haben folgende Bedeutung:
GLRD RUEHRER I.O. = Gleitringdichtung Rührer ist offen
VE0605 NICHT AUF = Ventil 0605 nicht auf
TEMP.REAKTOR = Temperatur im Reaktor < Grenzwert
GOS 1249 N. ZU = Rückmeldung Ventil 1249 nicht zu
GOS 1244 N. ZU = Rückmeldung Ventil 1244 nicht zu
GOS 1243 N. ZU = Rückmeldung Ventil 1243 nicht zu
GOS 1248 N. ZU = Rückmeldung Ventil 1248 nicht zu
BODENV.K1 N. ZU = Bodenventil K1 nicht zu
VAM-VORL. N. ZU = Zulauf Vinylacetat-Monomer nicht zu
WW-GR.MENG.N. ZU = Zulauf Weichwasser nicht zu
SP.W.VENT. N. ZU = Spülwasserventil nicht zu
PROBENAHME N. ZU = Probenahmehahn nicht zu
BERSTSCH.REAKTOR = Berstscheibe nicht gebrochen
BERSTSCH.REAKTOR = Berstscheibe nicht gebrochen
RUEHRER STEHT = Betriebszustand Rührer
VOSA 2 = Übergeordnete Schutzaus-Funktion

Sind diese Bedingungen erfüllt ist die Zustandsanzeige (0,1) dunkel hinterlegt. Die einzelnen Bedingungen sind in der erfindungsgemäßen Zwischenebene mit "oder"-Logik verknüpft, ist eine davon nicht erfüllt wird "Schutz aus" d.h. Einschaltsperre aktiviert. Diese hat Priorität vor allen Verriegelungs- oder Ansteuerbedingungen, sowohl in der Automatik- als auch in der Handebene (keine Verknüpfung mit diesen Grundfunktionen).

Im vorliegenden Fall sind alle Bedingungen erfüllt, die Einschaltsperre ist nicht aktiv.

In der Mitte sind die Bedingungen zur Öffnung der Verriegelung des Ventils aufgeführt. Diese Bedingungen: Einhalten definierter Druckbereiche und Temperaturbereiche sowie geschlossener Probeentnahmehahn für Latex, sind in der Zwischenebene "und"-verknüpft, das heißt sie müssen kumulativ erfüllt sein (dunkel hinterlegt) damit keine Verriegelung des Ventils erfolgt.

Die Abkürzungen haben folgende Bedeutung:
DR.PUFFER>60BAR = Druckpuffer größer 60 bar
DRUCK K1 < 75 BAR = Reaktordruck kleiner 75 bar
PROBE LATEX ZU = Probenahmehahn geschlossen
K1 TEMP < SOLL+10 = Reaktortemperatur < Sollwert + 10 °C

Rechts sind die Ansteuerungen des Ventils aufgeführt, mit welchen aus Grundfunktionen GF (hier GF1250, GF1361, GF1211), aus der Motoreinzelsteuerebene ME (hier ME1234) oder aus der Ventileinzelsteuerebene VE (hier VE1210, VE1211) das Ventil angesteuert werden kann. Die Ansteuerungen sind "oder"-verknüpft, das heißt eine Ansteuerung genügt um das Ventil zu öffnen. Wird das Ventil aus einer Ansteuerung (hier GF1211) angesteuert, ist das Feld (0,1) dunkel hinterlegt.

Der aktuelle Zustand des Ethylenregelventils im vorliegenden Fall ist, wie am rechten Rand erkennbar (Pfeilsymbol, dunkel hinterlegte 0): "geschlossen". Obwohl das Ventil angesteuert wird und die Einschaltsperre nicht aktiviert ist, ist das Ventil aber dennoch nicht geöffnet. Nach den bisher bekannten Verfahren, ohne Zwischenebene, wäre die Ursache dafür erst nach längeren Nachforschungen feststellbar gewesen.

Wie Figur 4 zeigt, ist mit dem erfindungsgemäßen Verfahren die Ursache auf einen Blick feststellbar: Eine der "und"- verknüpften Bedingungen zur Öffnung der Verriegelung ist nicht erfüllt - Probeentnahmehahn ist geöffnet. Da die Verriegelungsbedingungen und die Ansteuerungen mit "und"-Logik verknüpft sind, bleibt das Ethylenregelventil trotz Ansteuerung geschlossen, da der Steuerbit der Einzelansteuerung nicht aktiviert wird (Anzeige SZU dunkel hinterlegt).

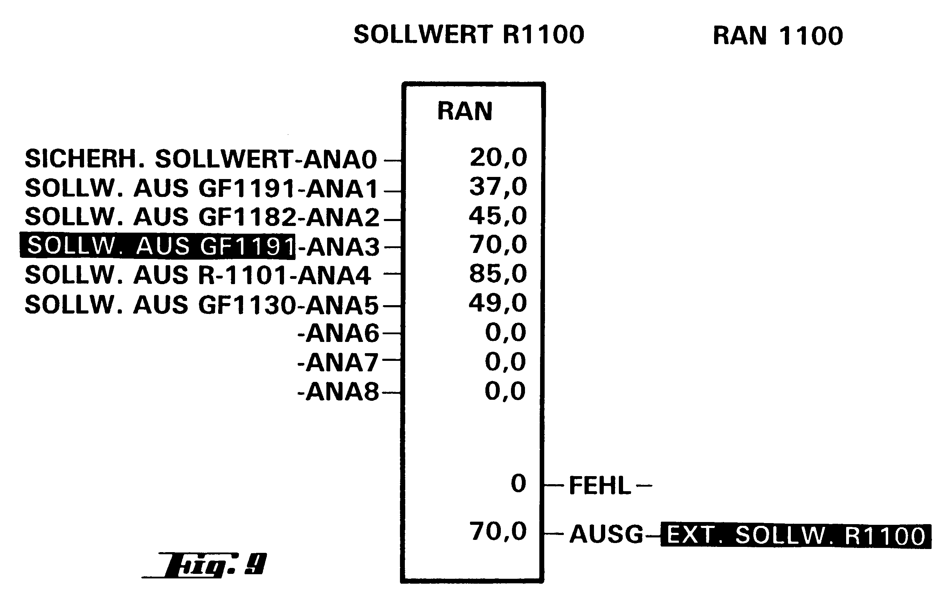

Figur 5 zeigt wiederum die Visualisierung des Zustands der in der Zwischenebene wirksamen Programmteile der Prozeßsteuerung. Wie in Figur 4 ist auch hier das Ethylenregelventil geschlossen obwohl es durch die Grundfunktion GF1211 angesteuert wird. Im Gegensatz zu Figur 4 sind hier jedoch alle Bedingungen zur Inaktivierung der Verriegelungen erfüllt. Die "und"-Logik zwischen Verriegelungsblock und Ansteuerblock setzt den Steuerbit für die Einzelansteuerung des Ventils auf "SAUF". Ursache für das Nichtöffnen ist hier, daß eine der Bedingungen zur Inaktivierung der Einschaltsperre nicht erfüllt ist: das Bodenventil K1 ist geöffnet. Da damit im Schutzaus-Block, in dem die Bedingungen mit "oder"-Logik verknüpft sind, eine der Bedingungen nicht erfüllt ist, kann das Ventil weder im Automatik-Modus noch mit Handbedienung angesteuert werden.

In Figur 5 sind auch noch Zusatzinformationen zu den statischen Zuständen des Ventils visualisiert: Hardware-Verriegelung, Ventilöffnungs- und schließzeiten, Sicherheitsstellung, Betriebszustand der Automatiksteuerung. Die Bedeutung der Abkürzungen ist folgende:
HW-VERR : KEINE = keine Hardware-Verriegelung
VE TAUF : 7 SEC = Ventil-Einzelsteuerung Zeit auf
VE TZU : 3 SEC = Ventil-Einzelsteuerung Zeit zu
SICHERHEITSSTELLUNG : ZU = Ventil in Sicherheitsstellung verriegelt
AS-BETRIEB : AUTO = Automatisierungsprogramm läuft AUSGANG AS-AUSFALL:SPEICHERND = bei Ausfall des Automatisierungsprogramms werden die zuletzt ausgeführten Funktionen weiter ausgeführt

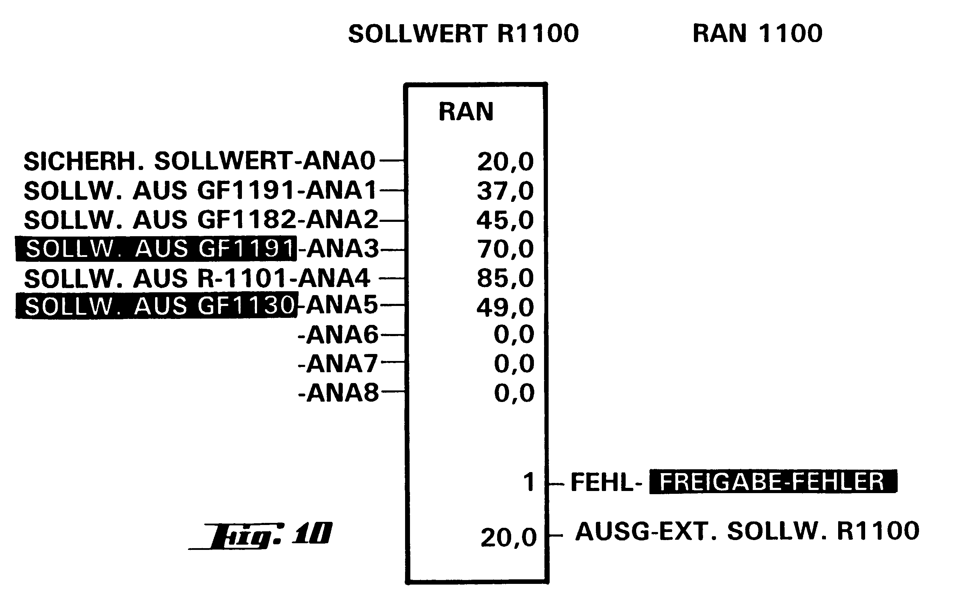

Figur 6, 7 und 8 zeigen die in Figur 4 in ihrer logischen Verknüpfung dargestellten Blöcke der Einschaltsperrren (Fig.6), der Verriegelungen (Fig.7) und der Ansteuerungen (Fig.8) in Einzeldarstellung am Prozeßbedien- und beobachtungssystem.

Figur 9 und Figur 10 zeigen die Ansteuerung des Reglers RAN1100 über die Rangierebene (Zwischenebene) R1100. Die Zwischenebene kann mit Sollwerten aus verschiedenen Grundfunktionen (hier GF1191, GF1182, GF1130), Regelfunktionen (hier R-1101) und einem Sicherheits-Sollwert über verschiedene Eingänge (hier ANA0 bis ANA8) angesteuert werden.
In Figur 9 wird aus der Grundfunktion GF1191 mit einem Sollwert angesteuert und der Sollwert wird auf den Ausgang durchrangiert - die Regelgröße wird eingestellt. In Figur 10 erfolgt keine Freigabe aus der Zwischenebene, sondern es wird der Sicherheits-Sollwert ausgegeben. Mit der erfindungsgemäßen Vorgehensweise sind die Ursachen für diesen Freigabe-Fehler erkennbar: Die Zwischenebene wird nicht mit einem eindeutigen Regelwert angesteuert, sondern über zwei verschiedene Grundfunktionen GF1191 bzw. GF1130 mit zwei unterschiedlichen Sollwerten.

Die Vorteile des erfindungsgemäßen Verfahrens bestehen darin, daß die bisher in unterschiedlichen Automatikprogrammen enthaltenen Ansteuerungen, Verriegelungen und Einschaltsperren jetzt aktorbezogen in einer separaten Programmebene (Zwischenebene) gespeichert und visualisiert werden. Durch die Einführung und Normierung der Zwischenebene zum Beispiel bei Ventilen und Motoren in Ansteuer- (ANST), Verriegelungs(VER) und Einschaltsperren-Ebene (SA) und bei Sollwertaufschaltungen auf Regler in Rangierebene (RAN) wurde eine weitgehende Entmaschung der Automatikprogramme erreicht. Weiter werden die Automatikprogramme durch diese Auslagerung von belastender Nebensoftware befreit und damit zwangsweise übersichtlicher, was sich positiv auf die Qualitätssicherung der Automatikprogramme auswirkt.

Die konsequente Visualisierung dieser normierten Zwischenebene wirkt für das Bedienungspersonal der Prozeßsteuerung wie ein Fenster in die Automatikprogramme und zeigt ihm für die einzelnen Aktoren die dynamischen Zustände (aktuell wirksame Ansteuerungen, Verriegelungen und Einschaltsperren) und auch die statischen Zustände (Sicherheitsstellung, Öffnungs- und Schließzeiten). Damit werden eindeutige Aussagen über Störungen und deren Ursachen möglich, welche unumgänglich für die Störungsbeseitigung und entscheidende Faktoren für die Sicherheit, Verfügbarkeit und Wirtschaftlichkeit einer Anlage sind.

## Patentansprüche

1. Verfahren zur automatischen Steuerung von Chargenprozessen mittels einer Prozeßsteuerung bei der Automatikprogramme (1) auf Einzelsteuerbausteine (2) zugreifen, dadurch gekennzeichnet, daß
a) die in den Automatikprogrammen (1) enthaltenen Steueranweisungen und Parameterdefinitionen für die Ansteuerung, Verriegelung und Einschaltsperre von Aktoren (3) im Feld in einer separaten Programmebene (4) gespeichert werden,
b) in dieser separaten Programmebene (4) die Steueranweisungen und Parameterdefinitionen für jeden anzusteuernden Aktor (3) aktorweise zusammengefaßt und logisch verknüpft werden, und
c) die aktuell wirksamen Ansteuerungen, Verriegelungen und Einschaltsperren und deren logische Verknüpfung aktorweise an das Prozeßbedien- und -beobachtungs-system ausgegeben werden.

2. Verfahren nach Anspruch 1, dadurch gekennzeichnet, daß die Steueranweisungen und Parametrierungen für einzelne oder mehrere Ansteuerungen und/oder Verriegelungen und/oder Einschaltsperren eines oder mehrerer Aktoren (3) aktorweise in der genannten Programmebene (4) gespeichert werden.

3. Verfahren nach Anspruch 1 oder 2, dadurch gekennzeichnet, daß die Steueranweisungen und Parametrierungen für alle Ansteuerungen und/oder Verriegelungen und/oder Einschaltsperren aller von der Prozeßsteuerung angesteuerten Aktoren (3) in die genannte Zwischenebene (4) ausgelagert werden.

4. Verfahren nach Anspruch 1, 2 oder 3, dadurch gekennzeichnet, daß zur Bedienbeobachtung der Prozeßsteuerung einzelne, mehrere oder alle der vorhandenen Ansteuerungen und/oder Verriegelungen und/oder Einschaltsperren eines Aktors (3) in dem Prozeßbedien- und -beobachtungs-system dargestellt werden.

5. Verfahren nach Anspruch 4, dadurch gekennzeichnet, daß die Ansteuerungen, Verriegelungen und/oder Einschaltsperren aktorweise oder aktorgruppenweise unter Darstellung der logischen Verknüpfungen zwischen den Zuständen der Aktoren (3) im Prozeßbedien- und -beobachtungssystem dargestellt werden.

6. Verfahren nach Anspruch 4 oder 5, dadurch gekennzeichnet, daß die Ansteuerungen, Verriegelungen und Sperren eines Aktors (3) im Prozeßbedien- und -beobachtungs-system zu einem Bild zusammengefaßt werden.

7. Verfahren nach Anspruch 4, 5 oder 6, dadurch gekennzeichnet, daß diese Anzeigen durch die Visualisierung statischer Betriebszustände ergänzt werden.

## Claims

1. Method for the automatic control of batch processes by means of a process control in which automatic control programs (1) access individual control modules (2), characterized in that
a) the control instructions and parameter definitions contained in the automatic control programs (1) are stored in a separate program level (4) for the activation, interlocking and switch-on blocking of actuators (3) in the field,
b) in this separate program level (4), the control instructions and parameter definitions for each actuator (3) to be activated are collected, actuator by actuator, and logically combined, and
c) the currently effective activations, interlockings and switch-on blockings, and the logical combination thereof, are output actuator by actuator to the process operating and monitoring system.

2. Method according to Claim 1, characterized in that the control instructions and parameterizations for individual or a plurality of activations and/or interlockings and/or switch-on blockings of one or more actuators (3) are stored, actuator by actuator, in the aforementioned program level (4).

3. Method according to Claim 1 or 2, characterized in that the control instructions and parameterizations for all activations and/or interlockings and/or switch-on blockings of all actuators (3) activated by the process control are displaced into the aforementioned intermediate level (4).

4. Method according to Claim 1, 2 or 3, characterized in that, for operator monitoring of the process control, individual, a plurality of or all the existing activations and/or interlockings and/or switch-on blockings of an actuator (3) are displayed in the process operating and monitoring system.

5. Method according to Claim 4, characterized in that the activations, interlockings and/or switch-on blockings are displayed in the process operating and monitoring system, actuator by actuator or actuator group by actuator group, with display of the logical combinations between the statuses of the actuators (3).

6. Method according to Claim 4 or 5, characterized in that the activations, interlockings and blockings of an actuator (3) in the process operating and monitoring system are collected to form a picture.

7. Method according to Claim 4, 5 or 6, characterized in that these displays are complemented by the visual display of static operating statuses.

## Revendications

1. Procédé de commande automatique de processus discontinus au moyen d'une commande de processus dans laquelle des programmes automatiques (1) accèdent à des modules de commande individuelle (2), caractérisé en ce que
a) les instructions de commande et les définitions de paramètres contenues dans le programme automatique (1), pour la commande, le verrouillage et le blocage d'enclenchement d'actionneurs (3) sur le terrain, sont mémorisées dans un niveau de programme distinct (4),
b) dans ce niveau de programme distinct (4), les instructions de commande et les définitions de paramètres pour chaque actionneur (3) à commander sont réunies par actionneur et sont combinées logiquement, et
c) les commandes, les verrouillages et les blocages d'enclenchement présentement actifs et leur combinaison logique sont transmis par actionneur au système de conduite et de surveillance de processus.

2. Procédé suivant la revendication 1, caractérisé en ce que les instructions de commande et les paramétrages pour un seul ou plusieurs verrouillages et/ou commandes et/ou blocages d'enclenchement d'un ou de plusieurs actionneurs (3) sont mémorisés par actionneur dans le niveau de programme (4) cité.

3. Procédé suivant la revendication 1 ou 2, caractérisé en ce que les instructions de commande et les paramétrages pour tous les verrouillages et/ou commandes et/ou blocages d'enclenchement de tous les actionneurs (3) commandés par la commande de processus sont transférés dans le niveau intermédiaire (4) cité.

4. Procédé suivant la revendication 1, 2 ou 3, caractérisé en ce que, pour la surveillance de la conduite de la commande de processus, un seul, plusieurs, ou tous les verrouillages et/ou commandes et/ou blocages d'enclenchement présents d'un actionneur (3) sont représentés dans le système de conduite et de surveillance de processus.

5. Procédé suivant la revendication 4, caractérisé en ce que les commandes, verrouillages et/ou blocages d'enclenchement sont représentés par actionneur ou par groupe d'actionneurs, dans le cadre de la représentation des combinaisons logiques entre les états des actionneurs (3), dans le système de conduite et de surveillance de processus.

6. Procédé suivant la revendication 4 ou 5, caractérisé en ce que les commandes, verrouillages et blocages d'un actionneur (3) sont réunis en une image dans le système de conduite et de surveillance de processus.

7. Procédé suivant la revendication 4, 5 ou 6, caractérisé en ce que ces affichages sont complétés par la visualisation d'états de fonctionnement statiques.
